# FASCICULE DE BREVET EUROPEEN

(11) **EP 4 416 398 B1**
(45) Date de publication et mention de la délivrance du brevet: **03.12.2025**
(21) Numéro de dépôt: 22802670.4
(22) Date de dépôt: 10.10.2022
(51) Int. Cl.: F16B 37/04, B25B 23/00, F16B 19/02, F16B 33/00, F16B 5/02

(54) **DISPOSITIF DE FIXATION**
BEFESTIGUNGSVORRICHTUNG
FASTENING DEVICE

(30) Priorité: 15.10.2021 FR 2110980
(43) Date de publication de la demande: 21.08.2024
(73) Titulaire: A. Raymond et Cie, 38000 Grenoble (FR)
(72) Inventeur: MOUILLON, Romain, 38340 Voreppe (FR); ALBARAN, Jean-Francois, 38760 Varces Allières et Risset (FR)
(74) Mandataire: Santarelli
(86) Numéro de dépôt international: PCT/FR2022/051906
(87) Numéro de publication internationale: WO 2023/062311

(56) Documents cités:
- FR-A1- 2 857 761
- US-A1- 2015 152 902
- US-A1- 2021 180 640

## Description

### Domaine technique de l'invention

La présente invention concerne un dispositif de fixation, notamment un dispositif plastique de pré-maintien pour maintenir une vis sur une pièce à fixer. La présente invention concerne également un élément de fixation comportant un tel dispositif plastique de pré-maintien et une vis. Par exemple, des batteries de traction peuvent être fixées à la structure d'un véhicule électrique au moyen des éléments de fixation. La présente invention se rapporte également à un ensemble pré-monté qui comporte l'élément de fixation selon l'invention et une structure telle qu'un bac batterie.

### Technique antérieure

Notamment, dans le domaine du montage des batteries de traction sur une structure de véhicule, les automates sont utilisés pour effectuer l'étape de vissage sur les vis qui sont pré-maintenues dans l'entretoise portant le bac de batterie. Il est très préférable que le maintien de la vis en position pendant l'avancement de la ligne de montage soit assuré jusqu'au poste de vissage. La vis est souvent maintenue dans l'entretoise par une agrafe. On connaît de l'état de la technique une agrafe permettant de pré-maintenir une vis dans une structure.

Le document brevet US20090317207A1 décrit un ensemble de liaison comportant une vis et une douille ayant un élément à ressort. La partie filetée de la vis est engagée avec une extrémité de l'élément à ressort lorsque ce dernier est déformé par un perçage qui reçoit cet élément de liaison.

Ce dispositif ne prévoit pas un engagement entre la vis et le manchon en position non pré-montée dans le perçage. Un autre problème est que le montage et/ou le démontage avec un tel ensemble de liaison nécessite des manœuvres complexes. Un autre dispositif de pré-maintien est connu de US 2015/152902 A1.

### Exposé de l'invention

La présente invention vise à remédier à ces inconvénients, en proposant dispositif de fixation qui permet de fixer un bac batterie à une structure tout en garantissant le dispositif de fixation en position durant l'avancement de la ligne de montage.

À cet effet, la présente invention concerne un clip de pré-maintien selon la revendication 1 pour maintenir une vis sur une pièce à fixer. La présente invention concerne également un élément de fixation comportant le clip de pré-maintien et un ensemble pré-monté qui comporte un clip de pré-maintien selon la présente invention.

Le clip de pré-maintien, qui est sous forme de manchon, comporte un corps tubulaire sensiblement cylindrique ayant une ouverture suivant son axe.

Selon l'invention, le clip de pré-maintien présente les caractéristiques suivantes :
- le clip comporte au moins un élément à ressort sur la surface extérieure du corps, et l'élément à ressort fait saillie hors de la surface extérieure du corps et est susceptible d'être déformé vers l'axe du corps; et
- le clip comporte en outre au moins une protubérance sur la surface intérieure du corps, et ladite au moins protubérance est susceptible d'être taraudée lorsque une tige filetée avec un diamètre extérieur du filetage supérieur au diamètre intérieur de l'ouverture est introduite par vissage dans l'ouverture.

Avantageusement, le clip est solidaire de la vis par vissage.

Avantageusement, le clip recevant une vis taraudée en position verticale peut être suspendu ou maintenu dans une entretoise d'une structure. L'élément à ressort permet un maintien en altitude du clip et de la vis, notamment vis-à-vis le poids de la vis.

Avantageusement, la vis tient en position durant l'avancement de la ligne de montage jusqu'au poste de vissage.

Dans un mode de réalisation, le clip de pré-maintien comporte trois éléments à ressort répartis à distance égale sur la surface extérieure du corps.

Selon l'invention, ledit au moins un élément à ressort est un ressort en lame sous forme de V, les deux extrémités de l'élément à ressort étant solidaires au corps.

Avantageusement, le ressort en lame sous forme de V est déformable pour l'introduction et permet également un démontage.

Dans un mode de réalisation, le clip de pré-maintien comporte une pluralité de protubérances sur la surface intérieure du corps.

Selon un deuxième aspect de l'invention, l'élément de fixation comporte
- une vis comportant une tête et une tige filetée avec filetage; et
- un clip de pré-maintien, sous forme de manchon, comportant un corps tubulaire sensiblement cylindrique ayant une ouverture suivant son axe,
- le clip comporte au moins un élément à ressort sur la surface extérieure du corps, l'élément à ressort faisant saillie hors de la surface extérieure du corps et étant susceptible d'être déformé vers l'axe du corps; et
- le clip comporte en outre au moins une protubérance sur la surface intérieure du corps, ladite au moins protubérance est susceptible d'être taraudée lorsque la tige filetée avec un diamètre extérieur du filetage supérieur au diamètre intérieur de l'ouverture est introduite par vissage dans l'ouverture.

Dans un mode de réalisation, le clip de pré-maintien comporte trois éléments à ressort répartis à distance égale sur la surface extérieure du corps.

Selon l'invention, ledit au moins un élément à ressort est un ressort en lame sous forme de V, les deux extrémités de l'élément à ressort étant solidaires au corps.

Dans un mode de réalisation, le clip comporte une pluralité de protubérances sur la surface intérieure du corps.

Selon un deuxième aspect de l'invention, l'ensemble pré-monté comporte
- une pièce comportant un perçage, le diamètre intérieur du perçage dans une première extrémité étant inférieur au diamètre intérieur général du perçage,
- une vis comportant une tête et une tige filetée avec filetage; et
- un clip de pré-maintien, sous forme de manchon, comportant un corps tubulaire sensiblement cylindrique ayant une ouverture suivant son axe,
- le clip comporte au moins un élément à ressort sur la surface extérieure du corps, l'élément à ressort faisant saillie hors de la surface extérieure du corps et étant susceptible d'être déformé vers l'axe du corps; et
- le clip comporte en outre au moins une protubérance sur la surface intérieure du corps, ladite au moins protubérance est susceptible d'être taraudée lorsque la tige filetée avec un diamètre extérieur du filetage supérieur au diamètre intérieur de l'ouverture est introduite par vissage dans l'ouverture.

Dans un mode de réalisation, ledit au moins un élément à ressort est déformé vers l'axe du corps lorsque le clip de pré-maintien avec la vis introduite est monté dans le perçage par la première extrémité.

Dans un mode de réalisation, le clip comporte trois éléments à ressort répartis à distance égale sur la surface extérieure du corps.

Selon l'invention, ledit au moins un élément à ressort est un ressort en lame sous forme de V, les deux extrémités de l'élément à ressort étant solidaires au corps.

Dans un mode de réalisation, le clip de pré-maintien comporte une pluralité de protubérances sur la surface intérieure du corps.

Dans un mode de réalisation, la pièce comporte un écrou dans lequel la vis peut être engagé par son extrémité libre. Lorsque la vis est engagée dans l'écrou, le clip de pré-maintien est en contact avec un support autre que l'écrou.

Avantageusement, ceci permet de conter le phénomène « contre écrou » lié à la surface.

### Brève description des figures

D'autres avantages, buts et caractéristiques de la présente invention ressortent de la description qui suit faite, dans un but explicatif et nullement limitatif, en regard des dessins annexés, dans lesquels :
la Figure 1 représente une vue en perspective d'un élément de fixation comportant un clip de pré-maintien selon la présente invention et une vis selon un mode de réalisation ;
la Figure 2 représente une vue de dessus d'un clip de pré-maintien selon un mode de réalisation ;
la Figure 3 représente une vue de coupe d'un ensemble pré-monté comportant un clip de pré-maintien selon la présente invention et une vis et une pièce à fixer ayant un perçage, d'où la coupe est réalisée suivant l'axe de la vis pré-montée sur la pièce ;
la Figure 4 représente une vue de coupe partielle d'un ensemble pré-monté de Figure 3, d'où la vis est engagée dans un écrou.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

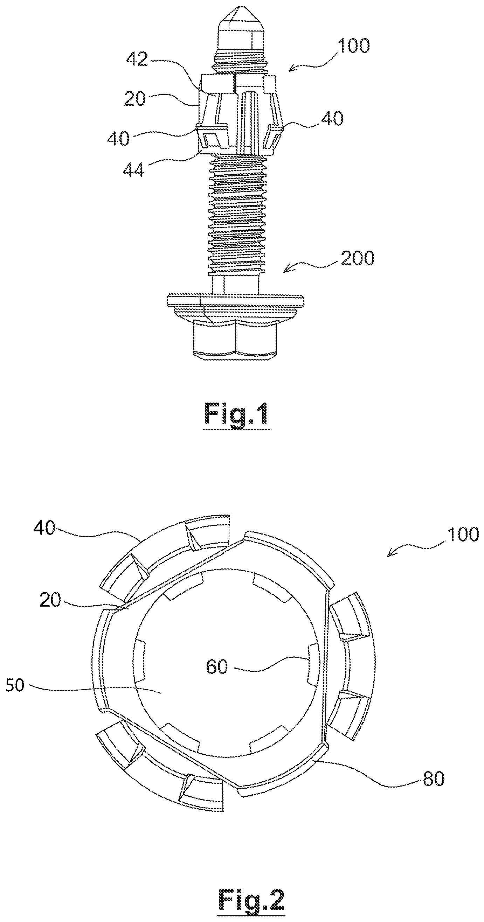

La Figure 1 montre une vue en perspective d'un élément de fixation comportant un clip de pré-maintien selon la présente invention et une vis selon un mode de réalisation.

Le clip de pré-maintien 100 se présente sous forme de manchon. Le clip comporte essentiellement un corps 20 tubulaire sensiblement cylindrique. Ce dernier comporte, suivant l'axe du corps, une ouverture 50 qui permet de recevoir une vis 200.

Le clip 100 selon l'invention peut être fabriqué par moulage de matière plastique connue, par exemple par injection thermoplastique, plus particulièrement en plastiques techniques tels que des polyamides, des résines d'acétal, des polyesters thermoplastiques. De préférence, le clip 100 est de matériaux connus permettant de résister au vieillissement et à la température. Avantageusement, le clip 100 est fabriqué au moyen d'un démoulage naturel et/ou d'un moulage avec un chariot.

Le clip 100 comporte au moins un élément à ressort 40 sur la surface extérieure du corps 20, de préférence trois éléments à ressort 40.

L'élément à ressort 40 fait saillie hors de la surface extérieure du corps 20. En plus, l'élément à ressort 40 et est susceptible d'être déformé vers l'axe du corps 20, sous l'effet d'une force extérieure.

Avantageusement, cet agencement permet d'avoir une sensation de clippage pour l'opérateur lorsque le clip est introduit dans une entretoise manuellement. De manière similaire, le fait que le clip engagé dans une entretoise, de préférence en Aluminium, peut être démonté rend le clip 100 réutilisable et/ou échangeable. Avantageusement, le démontage complet du clip 100 avec la vis 200 en cas de défaut de vissage en ligne d'assemblage permet remplacer rapidement par une simple opération.

Dans un autre mode de réalisation, le clip 100 avec la vis 200 est monté dans l'entretoise par pression/poussée de l'automate.

Avantageusement, l'au moins un élément à ressort 40 est agencé de sorte à maintenir le clip et la vis reçue en altitude dans l'entretoise.

Selon l'invention, l'élément à ressort 40 est un ressort en lame sous forme de V dont les deux extrémités sont solidaires au corps 20.

Une branche de lame en V vient s'appuyer contre l'interface inférieure de contact de l'entretoise.

Le clip 100 comporte en outre au moins une protubérance 60 sur la surface intérieure du corps 20. Lorsqu'une vis ayant une tige filetée avec un diamètre extérieur du filetage supérieur au diamètre intérieur de l'ouverture 50 est introduite par vissage dans l'ouverture 50, ladite au moins protubérance 60 est susceptible d'être taraudée. Avantageusement, le clip 100 est solidaire de la vis 200 par vissage.

Avantageusement, des filets de la vis 200 restent épargnés par le clip après son introduction pour avoir un excellent accostage après avec un écrou. Ceci sera détaillé plus loin.

La Figure 2 montre une vue de dessus d'un clip de pré-maintien selon un mode de réalisation.

Dans le mode de réalisation illustré, les trois éléments à ressort 40 dont répartis, de préférence à distance angulaire égale, sur la surface extérieure du corps 20. Avantageusement, ceci permet d'avoir une fixation plus équilibrée.

Dans ce mode de réalisation, le clip 100 comporte, sur la surface intérieure du corps 20, une pluralité de protubérances 60 qui préférentiellement sont réparties d'une manière uniforme.

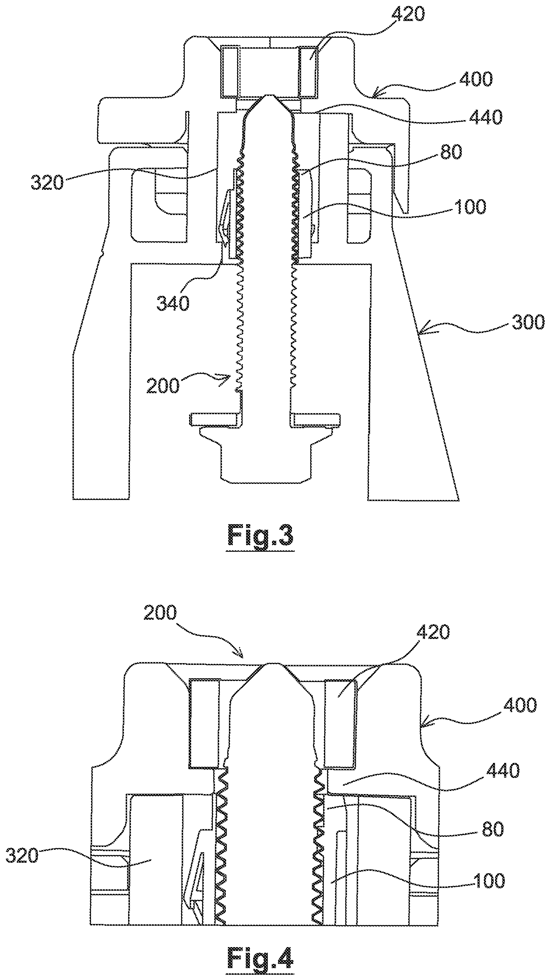

Le clip 100 comporte des zones de contact 80 dans son extrémité supérieure. Ceci sera détaillé plus loin à l'aide de la Figure 4.

La Figure 3 illustre une vue de coupe d'un ensemble pré-monté comportant un clip de pré-maintien selon la présente invention et une vis et une pièce à fixer ayant un perçage 320, d'où la coupe est réalisée suivant l'axe de la vis pré-montée sur la structure 300 qui est une entretoise.

Avantageusement, le perçage 320 comporte une portion réduite 340 servant de butée dont le diamètre intérieur est inférieur au diamètre intérieur général du perçage 320. La portion réduite 340 se trouve avantageusement dans une extrémité du perçage 320.

Il est prévu qu'un écrou 420 se positionne au-dessus du perçage 320 de l'entretoise 300 qui est destiné à recevoir le clip et la vis.

Dans un mode de réalisation, l'écrou est de préférence soudé ou serti sur une structure 400 située au-dessus de l'entretoise 300.

Le clip 100 selon l'invention et une vis 200 comportant une tête et une tige filetée avec filetage constitue un élément de fixation selon la présente invention. Une fois que la vis 200 est pré-embarquée dans le clip 100, la prochaine étape sera d'installer l'élément de fixation dans une entretoise 300 pourvue d'un perçage 320.

L'élément de fixation, c'est-à-dire le clip 100 recevant une vis taraudée 200, en position verticale peut être suspendu ou maintenu dans le perçage 320 d'une entretoise 300. L'élément à ressort permet un maintien en altitude du clip et de la vis 200, notamment vis-à-vis du poids de la vis 200. En fait, la branche inférieure de lame en V vient s'appuyer contre l'interface inférieure de contact de l'entretoise 300 au niveau de la portion réduite 340 du perçage. Avantageusement, la vis 200 tient en position durant l'avancement de la ligne de montage jusqu'au poste de vissage.

En position verticale, la présente invention permet avantageusement un débattement de la vis pré-montée 200 autour son axe dans l'entretoise 300 avant le vissage.

La Figure 4 illustre une vue de coupe partielle d'un ensemble pré-monté de Figure 3, d'où la vis 200 est engagée dans l'écrou 420.

Un ensemble pré-monté selon la présente invention, comporte une pièce 300 comportant un perçage 320, le diamètre intérieur du perçage 320 dans une première extrémité étant inférieur au diamètre intérieur général du perçage 300, et un élément de fixation comportant un clip et une vis. Le clip 100 avec la vis 200 est pré-monté dans le perçage 320.

Après que l'automate vient verrouiller le clip plastique selon l'invention dans l'entretoise via une pression/poussée de l'automate, cette poussée amène ensuite le clip avec la vis sur l'écrou 420 prévu au-dessus de la vis et ensuite le vissage finira le processus de fixation. Le clip est ainsi emprisonné dans l'entretoise 300.

Avantageusement, le système de pré-maintien, c'est-à-dire, les éléments à ressort, s'efface lors du vissage de la vis 200 dans la partie entretoise 300. Comme expliqué plus haut, le clip 100 peut également être monté dans l'entretoise 300 manuellement.

Il est prévu qu'un support 440 se trouve au-dessous de l'écrou 420. Lorsque la vis 200 est engagée dans l'écrou 420, les zones de contact 80 du clip 100 de pré-maintien viennent buter avec un support 440 autre que l'écrou 420.

Avantageusement, le fait que des filets de la vis 200 restent épargnés par le clip pendant son introduction permet d'avoir un excellent accostage avec l'écrou 420.

Avantageusement, ceci permet de contrer le phénomène « contre écrou » lié à la surface 20. En effet, si un contact direct entre le composant plastique et l'écrou se présente pour la fixation, une anomalie automate pourra survenir à cause du couple de vissage trop important.

### LISTE DES SIGNES DE RÉFÉRENCE

**[Tableaux 1]**

| Références | Désignations |
|---|---|
| 100 | Clip / Dispositif de fixation / Manchon |
| 20 | Corps |
| 40 | Elément à ressort / Ressort en lame sous forme de V |
| 42, 44 | Point fixation |
| 50 | Ouverture |
| 60 | Protubérance |
| 80 | Zone de contact |
| 200 | Vis taraudée |
| 300 | Entretoise |
| 320 | Perçage |
| 340 | Portion réduite / Butée |
| 400 | Structure véhicule / tôle |
| 420 | Écrou |
| 440 | Interface tôle |

## Revendications

1. Clip de pré-maintien (100), sous forme de manchon, comportant un corps (20) tubulaire sensiblement cylindrique ayant une ouverture (50) suivant son axe, où le clip (100) comporte au moins un élément à ressort (40) sur la surface extérieure du corps (20), l'élément à ressort (40) faisant saillie hors de la surface extérieure du corps (20) et étant susceptible d'être déformé vers l'axe du corps (20), et le clip (100) comporte en outre au moins une protubérance (60) sur la surface intérieure du corps (20), ladite au moins une protubérance (60) est susceptible d'être taraudée lorsque une tige filetée avec un diamètre extérieur du filetage supérieur au diamètre intérieur de l'ouverture (50) est introduite par vissage dans l'ouverture (50),
**caractérisé en ce que** l'élément à ressort (40) est un ressort en lame sous forme de V, et les deux extrémités de l'élément à ressort (40) sont solidaires au corps (20).

2. Clip de pré-maintien (100) selon la revendication 1, comportant trois éléments à ressort répartis à distance égale sur la surface extérieure du corps (20).

3. Clip de pré-maintien (100) selon l'une des revendications précédentes, comportant une pluralité de protubérances (60) sur la surface intérieure du corps (20).

4. Elément de fixation, comportant
une vis (200) comportant une tête et une tige filetée avec filetage; et un clip de pré-maintien (100) selon l'une des revendications 1 à 3.

5. Ensemble pré-monté, comportant
une pièce comportant un perçage, le diamètre intérieur du perçage dans une première extrémité étant inférieur au diamètre intérieur général du perçage,
une vis (200) comportant une tête et une tige filetée avec filetage; et un clip de pré-maintien (100) selon la revendication 1.

6. Ensemble pré-monté selon la revendication 5, dans lequel,
ledit au moins un élément à ressort (20) est déformé vers l'axe du corps (20) lorsque le clip de pré-maintien (100) avec la vis (200) introduite est monté dans le perçage par la première extrémité.

7. Ensemble pré-monté selon la revendication 5 ou 6, dans lequel le clip (100) comporte trois éléments à ressort répartis à distance égale sur la surface extérieure du corps (20).

8. Ensemble pré-monté selon l'une des revendications 5 à 7, le clip de pré-maintien (100) comporte une pluralité de protubérances (60) sur la surface intérieure du corps (20).

## Patentansprüche

1. Vorhalteclip (100), in Form einer Hülse, der einen im Wesentlichen zylindrischen röhrenförmigen Körper (20) umfasst, der eine Öffnung (50) entlang seiner Achse aufweist, wobei der Clip (100) mindestens ein Federelement (40) an der Außenfläche des Körpers (20) aufweist, wobei das Federelement (40) aus der Außenfläche des Körpers (20) herausragt und in Richtung der Achse des Körpers (20) verformbar ist, und
der Clip (100) ferner mindestens einen Vorsprung (60) an der Innenfläche des Körpers (20) aufweist, wobei der mindestens eine Vorsprung (60) gewindebohrbar ist, wenn eine Gewindestange mit einem Außendurchmesser des Gewindes, der größer ist als der Innendurchmesser der Öffnung (50), durch Einschrauben in die Öffnung (50) eingeführt wird, **dadurch gekennzeichnet, dass** das Federelement (40) eine V-förmige Blattfeder ist, und die beiden Enden des Federelements (40) fest mit dem Körper (20) verbunden sind.

2. Vorhalteclip (100) nach Anspruch 1, der drei auf der Außenfläche des Körpers (20) gleichmäßig verteilte Federelemente aufweist.

3. Vorhalteclip (100) nach einem der vorhergehenden Ansprüche, der eine Vielzahl von Vorsprüngen (60) an der Innenfläche des Körpers (20) aufweist.

4. Befestigungselement, das eine Schraube (200) aufweist, die einen Kopf und eine Gewindestange mit Gewinde aufweist; und einen Vorhalteclip (100) nach einem der Ansprüche 1 bis 3.

5. Vormontierte Baugruppe, die ein Teil aufweist, das eine Bohrung aufweist, wobei der Innendurchmesser der Bohrung in einem ersten Ende kleiner ist als der allgemeine Innendurchmesser der Bohrung, wobei eine Schraube (200) einen Kopf und eine Gewindestange mit Gewinde aufweist; und
einen Vorhalteclip (100) nach Anspruch 1.

6. Vormontierte Baugruppe nach Anspruch 5, wobei das mindestens eine Federelement (20) in Richtung der Achse des Körpers (20) verformt wird, wenn der Vorhalteclip (100) mit der eingeführten Schraube (200) von dem ersten Ende in die Bohrung montiert wird.

7. Vormontierte Baugruppe nach Anspruch 5 oder 6, wobei der Clip (100) drei Federelemente aufweist, die in gleichmäßigem Abstand auf der Außenfläche des Körpers (20) verteilt sind.

8. Vormontierte Baugruppe nach einem der Ansprüche 5 bis 7, wobei der Vorhalteclip (100) eine Vielzahl von Vorsprüngen (60) an der Innenfläche des Körpers (20) aufweist.

## Claims

1. Pre-holding clip (100), in the form of a sleeve, comprising a substantially cylindrical tubular body (20) having an opening (50) along its axis, wherein the clip (100) comprises at least one spring element (40) on the external surface of the body (20), the spring element (40) protruding from the external surface of the body (20) and being capable of being deformed towards the axis of the body (20), and
the clip (100) further comprises at least one protrusion (60) on the internal surface of the body (20), said at least one protrusion (60) is capable of being tapped when a threaded rod with an outside diameter of the thread greater than the inside diameter of the opening (50) is inserted by screwing into the opening (50), **characterized in that** the spring element (40) is a V-shaped leaf spring, and the two ends of the spring element (40) are secured to the body (20).

2. Pre-holding clip (100) according to claim 1, comprising three spring elements distributed at equal distances over the external surface of the body (20).

3. Pre-holding clip (100) according to one of the preceding claims, comprising a plurality of protrusions (60) on the internal surface of the body (20).

4. Fastening element, comprising a screw (200) comprising a threaded head and a threaded rod with thread; and a pre-holding clip (100) according to one of claims 1 to 3.

5. Pre-assembled assembly, comprising a part comprising a hole, the inside diameter of the hole in a first end being less than the overall inside diameter of the hole, a screw (200) comprising a head and a threaded rod with thread; and
a pre-holding clip (100) according to claim 1.

6. Pre-assembled assembly according to claim 5, wherein said at least one spring element (20) is deformed towards the axis of the body (20) when the pre-holding clip (100) with the screw (200) introduced is mounted in the hole by the first end.

7. Pre-assembled assembly according to claim 5 or 6, wherein the clip (100) comprises three spring elements distributed at equal distances over the external surface of the body (20).

8. Pre-assembled assembly according to one of claims 5 to 7, the pre-holding clip (100) comprises a plurality of protrusions (60) on the internal surface of the body (20).
